Europäisches Patentamt

European Patent Office

Office européen des brevets

(11) Veröffentlichungsnummer: **0 428 960 A1**

# (12) EUROPÄISCHE PATENTANMELDUNG

(21) Anmeldenummer: 90121548.3

(22) Anmeldetag: 10.11.90

(51) Int. Cl.5: **A01M 7/00**

(30) Priorität: 24.11.89 DE 3938870

(43) Veröffentlichungstag der Anmeldung:
29.05.91 Patentblatt 91/22

(84) Benannte Vertragsstaaten:
BE DE DK FR GB NL SE

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Wiemeyer, Benno**
**Im Sande 6**
**W-4531 Lotte-Halen(DE)**

(54) **Landwirtschaftliche Verteilmaschine.**

(57) Landwirtschaftliche Verteilmaschine, wie beispielsweise Feldspritze, mit einem Verteilergestänge, welches sich beidseitig der Maschine quer zur Fahrtrichtung der Maschine erstreckt und am Rahmen der Verteilmaschine mittels eines oder mehrerer Gelenke in aufrechter Ebene pendelnd aufgehängt ist, wobei das Verteilergestänge einseitig teilweise oder ganz, d. h., daß die eine Seite des Verteilergestänges unabhängig von der anderen Seite einklappbar ist. Um die gattungsgemäße landwirtschaftiche Verteilmaschine derart weiter zu entwickeln, daß bei unsymetrisch zueinander ausgeklappten Verteilerarmen des Verteilergestänges eine Pendelbewegung des Verteilergestänges gewährleistet bleibt, ist vorgesehen, daß zwischen dem Rahmen der Verteilmaschine oder dem am Rahmen auf und ab bewegbar angeordneten Gestängemittelteil (4) einerseits und dem Verteilergestänge andererseits eine Ausgleichsvorrichtung (59), die unsymetrische Gewichtsverhältnisse ausgleicht und gleichzeitig das Pendeln des Gestänges zuläßt, angeordnet ist, welche bei unsymetrisch ausgefalteten Verteilergestänge wirksam wird.

FIG.8

# LANDWIRTSCHAFTLICHE VERTEILMASCHINE

Die Erfindung betrifft eine landwirtschaftliche Verteilmaschine gemäß Oberbegriff des Patentanspruches 1.

Derartig ausgebildete landwirtschaftliche Verteilmaschinen sind in der landwirtschaftlichen Paxis bakannt. Um das Verteilergestänge vor Beschädigungen zu schützen und um eine parallele Führung des Verteilergestänges gegenüber der Bodenoberfläche zu erreichen, sind die an dem Rahmenmittelteil angeordneten, das Verteilergestänge bildenden Verteilerarme pendelnd am Maschinenrahmen der Verteilmaschine angelenkt. Hierbei befindet sich der Drehpunkt, um dem das Rahmenmittelteil beweglich gegenüber dem Maschinenrahmen der Verteilmaschine gelagert ist, oberhalb des Schwerpunktes des Verteilergestänges. Hierdurch soll gewährleistet werden, daß sich das aus den beiden Verteilerarmen bestehende Verteilergestänge immer wieder parallel zur Bodenoberfläche ausrichtet. Weiterhin soll durch die pendelnde Aufhängung des Verteilergestänges erreicht werden, daß die vom Zugfahrzeug der Verteilmaschine hervorgerufenen Stöße und Schwingungen sich nicht auf das Verteilergestänge übertragen, so daß das Verteilergestänge möglicht ruhig gegenüber der zu bearbeitenden Fläche geführt wird. Diese pendelnde Aufhängung des Verteilergestänges funktioniert aber nur bei symetrisch zueinander ausgeklappten Verteilerarmen. Wird das Verteilergestänge einseitig teilweise oder ganz eingeklappt, werden sich die Verteilerarme schräg stellen, wobei der jeweils ganz bzw. weiter ausgeklappte Verteilerarm mit seinem freien Ende auf den Boden aufschlagen kann. Um dieses Schrägstellen der unsymetrisch zueinander ausgeklappten Verteilerarme zu unterbinden, wird bei den bekannten, als Feldspritzen ausgebildeten Verteilmaschinen die Pendelaufhängung starr gesetzt, so daß die Verteilerarme keine Pendelbewegung mehr gegenüber dem Maschinenrahmen ausführen können. Hierdurch werden die Stöße und Schwingungen des die Verteilmaschine transportierenden Fahrzeuges auf die ausgeklappten Verteilerarme in unerwünschter Weise direkt übertragen. Dieses führt nicht selten zu Beschädigungen an den Verteilerarmen sowie an den Rahmenteilen der Feldspritze.

Der Erfindung liegt nun die Aufgabe zugrunde, die gattungsgemäße landwirtschaftiche Verteilmaschine derart weiter zu entwickeln, daß bei unsymetrisch zueinander ausgeklappten Verteilerarmen des Verteilergestänges eine Pendelbewegung des Verteilergestänges gewährleistet bleibt.

Diese Aufgabe wird in erfindungsgemäßer Weise dadurch gelöst, daß zwischen dem Rahmen der Verteilmaschine oder dem am Rahmen auf- und abbewegbar angeordneten Gestängemittelteiles einerseits und dem Verteilergestänge andererseits eine Ausgleichsvorrichtung, die unsymetrische Gewichtsverhältnisse ausgleicht und gleichzeitig das Pendeln des Gestänges zuläßt, angeordnet ist, welche bei unsymetrisch ausgefalteten Verteilergestängen wirksam wird.

Infolge dieser Maßnahmen läßt sich das aus den beiden Verteilerarmen bestehende Verteilergestänge unsymetrisch zueinander einklappen, wobei gleichzeitig die pendelnde Aufhängung des Verteilergestänges aufrecht erhalten bleibt, so daß in hervorragender Weise die vom Zugfahrzeug der Verteilmaschine vorgerufenen Stöße und Schwingungen nicht auf das Verteilergestänge übertragen werden. Diese Ausgleichsvorrichtung tritt automatisch in Kraft, sobald unsymetrische Gewichtsverhältnisse durch unsymetrisch ein- bzw. ausgeklappte Verteilerarme entstehen. Durch die Aufrechterhaltung der Pendelbewegung bei unsymetrisch zueinander aus- bzw. eingeklappten Verteilerarmen werden sowohl der Rahmen der Verteilmaschine als auch die das Verteilergestänge bildenden Verteilerarme vor Beschädigungen geschützt.

Durch das deutsche Gebrauchsmuster G 87 11 751.7 ist bereits eine Feldspritze bekannt, bei der durch wahlweise symetrisch oder unsymetrisch vertellbare Anschläge Pendelbereiche sowie arretierte Lagen des Tragrahmens, an dem die Verteilerarme angelenkt sind, vorgebbar sind. Hierdurch wird der Tragrahmen auch bei überwiegend einseitiger Belastung in Horizontallage bzw. zur Bodenebene parallele Lage gehalten. Gleichzeitig soll sich bei allen Einstellungen des Tragrahmens ein Pendelbereich vorgeben bzw. ausschalten lassen. Aber auch bei dieser bekannten Feldspritze ist eine Pendelbewegung des unsymetrisch eingeklappten Verteilergestänges in uneingeschränktem Maße, wie bei symetrisch zueinander ausgeklappten Verteilerarmen, in aufrechter Ebene nicht möglich. Die Bewegung des weit ausgeklappten Verteilerarmes beschränkt sich nur auf ein Ausweichen des Verteilerarmes in eine Richtung und zwar nach oben.

Weitere Einzelheiten der Erfindung sind der Bespielsbeschreibung und den Zeichnungen zu entnehmen. Hierbei zeigt

Fig. 1 die in erfindungsgemäßer Weise ausgebildete Feldspritze mit symetrisch zueinander ausgeklappten Verteilerarmen in der Ansicht von hinten,

Fig. 2 die Feldspritze gemäß Fig. 1 mit unsymetrisch zueinander ausgeklappten Verteilerarmen, wobei der äußere Abschnitt des aus vier einzelnen Abschnitten bestehenden rechten Verteilerarmes eingeklappt ist,

Fig. 3 die Feldspritze gemäß Fig. 1, wobei die beiden äußeren Verteilerarmabschnitte eingeklappt sind,

Fig. 4 die Feldspritze gemäß Fig. 1, wobei sich der rechte Verteilerarm des Verteilergestänges in Transportstellung befindet,

Fig. 5 die Feldspritze gemäß Fig. 1, wobei sich beide Verteilerarme in Transportstellung befinden,

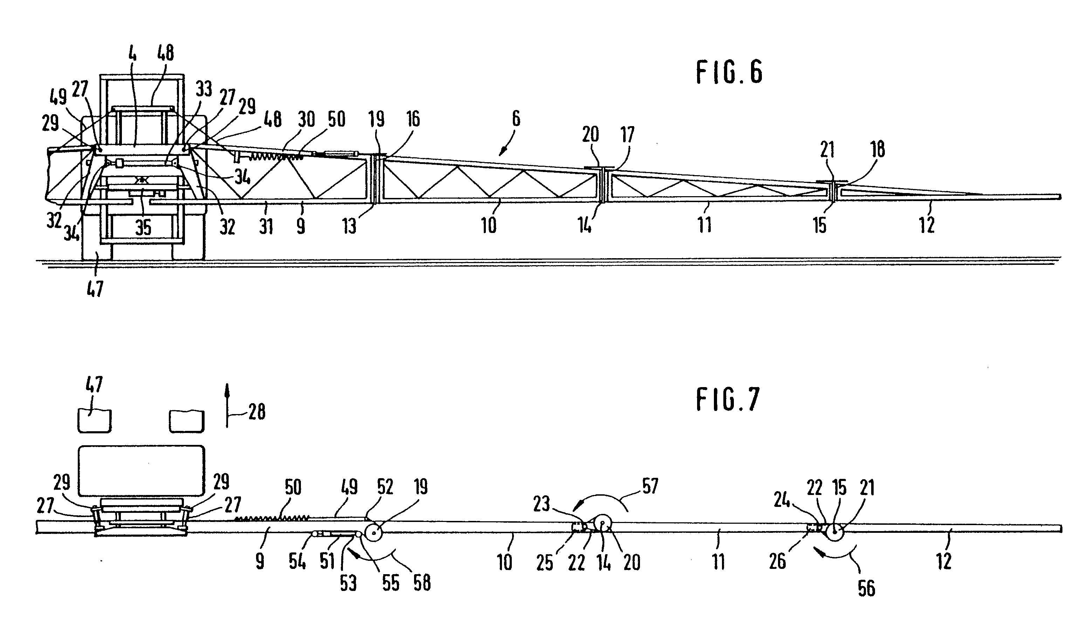

Fig. 6 der rechte Verteilerarm der Feldpritze gemäß Fig. 1 in vergrößertem Maßstab,

Fig. 7 der Verteilerarm gemäß Fig. 6 in der Draufsicht und

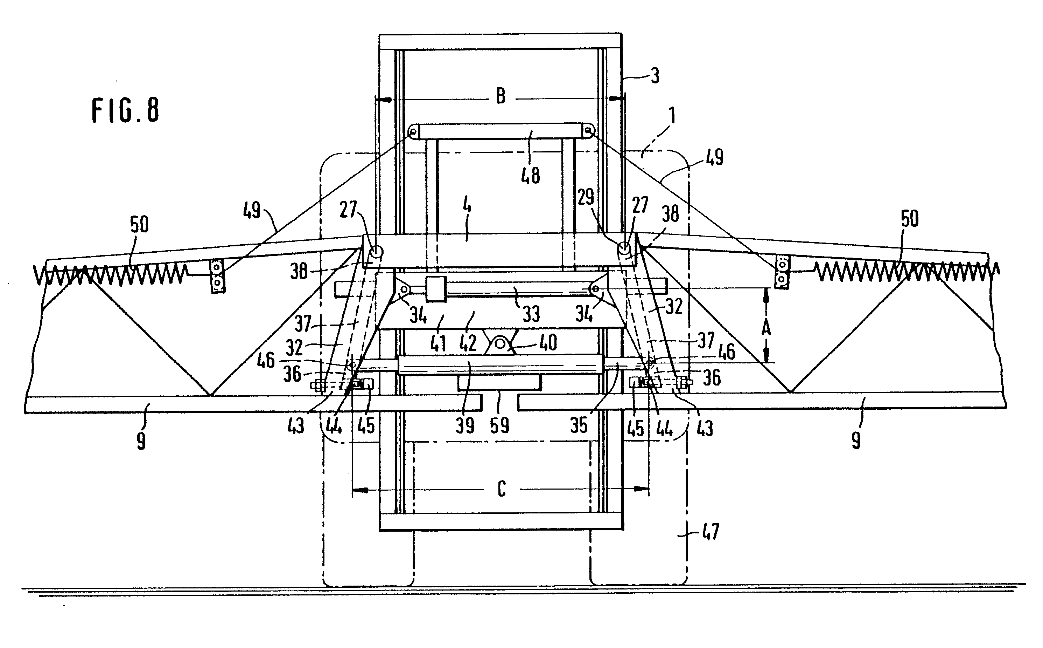

Fig. 8 die Darstellung des Mittelteiles der Feldspritze gemäß Fig. 1 und der teilweisen Darstellung der Verteilerarme.

Die Feldspritze weist den Flüssigkeitsbehälter 1 auf, der von dem Maschinenrahmen 2 getragen wird. Der Maschinenrahmen 2 weist wiederum die aufrechte Schiebeführung 3 auf, in dem das Rahmenmittelteil 4 höhenbeweglich befestigt ist. An dem Rahmenmittelteil 4 ist jeweils rechts und links der Fahrzeuglängsachse 5 das aus den beiden Verteilerarmen 6 und 7 bestehende Verteilergestänge 8 befestigt. Die Verteilerarme 6 und 7 bestehen jeweils aus den einzelnen Abschnitten 9, 10, 11 und 12. Hierbei sind diese Abschnitte 9, 10, 11 und 12 jeweils mittels der die aufrechten Achsen 13, 14 und 15 aufweisende Gelenke 16, 17 und 18 verbunden. Auf den aufrechten Achsen 13, 14 und 15 dieser Gelenke 16, 17 und 18 befinden sich jeweils die Kettenräder 19, 20 und 21.

Über die Kette 22 wirken die den beiden äußeren Auslegersbschnitten 11 und 12 zugeordneten Kettenräder 20 und 21 jeweils mit dem Antriebsritzel 23 bzw. 24 zusammen. Diese Antriebsritzel 23 und 24 sind auf den Ausgangswellen der in den Verteilerarmabschnitten 10 und 11 integrierten Elektromotore 25 und 26 angeordnet.

Der innerste Verteilerarmabschnitt 9 des Verteilerarmes 6 ist mittels des Gelenkes 27 direkt an dem Rahmenmittelteil 4 der Feldspritze angelenkt. Dieses Gelenk 27 weist die annähernd horizontale und annähernd in Fahrtrichtung 28 verlaufende Schwenkachse 29 auf. Die Verteilerarme 6 und 7 sind als Fachwerkkonstruktionen ausgebildet. Der innerste Abschnitt 9 des Verteilerarmes 6 weist das obere und untere Verteilerarmprofil 30 und 31 auf. Die beiden Verteilerarmprofile 30 und 31 die innersten Abschnitte 9 sind über die annähernd aufrecht verlaufende Verbindungsstrebe 32 miteinander verbunden. Zwischen dieser Verbindungsstrebe 32 und dem Maschinenmittelteil ist jeweils das Gelenk 27 angeordnet. Unterhalb der oberen Gelenke 27 ist der die beiden Verbindungsstreben 32 miteinander verbindende Hydraulikzylinder 33, in den an den Verbindungsstreben 32 angeschweißten Halterungen 34 befestigt. Im unteren Bereich der Verteilerarme 6 und 7 werden die Verteilerarme 6 und 7 über die in dem Abstand A zu den oberen Gelenken 27 angeordnete Stange 35 in ihrer Arbeitsstellung gehalten. Diese Stange 35 ist gelenkig an den unteren Enden 36 der aufrechten Streben 37 angelenkt. Die aufrechten Streben 37 sind in ihrem oberen Ende 38 gelenkig an dem Rahmenmittelteil 4 befestigt, in dem sie ebenfalls auf der annähernd in Fahrtrichtung 28 verlaufenden Schwenkachse 29 befestigt sind. Die Stange 35 ist also beweglich gegenüber den Verteilerarmen 6 und 7 am Maschinenrahmen befestigt. Hierbei bewegt sich die Stange 35 in dem Halterungsrohr 39, welches über die Halterung 40 verschwenkbar an dem Gehäuse 41 der zentralen Höhenverstelleinrichtung 42 angelenkt ist.

Die im unteren Bereich 43, der als inneres Teil ausgebildeten Verbindungsstrebe 32 der Verteilerarme 6 und 7, angeordneten einstellbaren Anschlagelemente 44 wirken mit den unteren Enden 45 der aufrechten Streben 37 zusammen. Mittels dieser einstellbaren Anschlagelemente 44 werden die Verteilerarme 6 und 7 in ihrer Arbeitsstellung gehalten, wobei die einstellbaren Anschlagelemente 44 zum Einstellen bzw. Ausgleichen von Fertigungstoleranzen bezüglich der waagerechten Lage der sich in Arbeitsstellung befindlichen Verteilerarme 6 und 7 dient.

Der Abstand der oberen Gelenke 27, mittels derer die Verteilerarme 6 und 7 an dem Rahmenmittelteil 4 angelenkt sind, weisen den Abstand B zueinander auf, der kleiner ist als der Abstand C, den die die Stange 35 anlenkenden Gelenke 46 zueinander aufweisen. Hierdurch ergibt sich die in aufrechter Ebene gegenläufig pendelnd an dem Rahmenmittelteil 4 angeordnete Anlenkung des aus den beiden Verteilerarmen 6 und 7 bestehenden Verteilergestänges 8 mittels einer trapezförmigen Viergelenkanordnung. Dadurch, daß der Abstand der oberen Gelenke 27 einen kleineren Abstand B aufweist als der Abstand der die Stange 35 anlenkenden Gelenke 46 wird erreicht, daß sich das Verteilergestänge 8 stets nach dem Schlepperniveau des die Feldspritze transportierenden Ackerschleppers 47 ausrichtet.

Zwischen dem am Rahmenmittelteil 4 angeordneten Traggerüst 48 und den beiden innersten Verteilerarmabschnitten 9 ist jeweils die als Seil ausgebildete Abspannvorrichtung 49 befestigt. Diese Abspannvorrichtung 49 weist die Zugfeder 50 auf und ist mit der zwischen dem innersten Verteilerarmabschnitt 9 und dem zweitinnersten Verteilerarmabschnitt 10 wirksamen, als Hydraulikzylinder 51 ausgebildeten Betätigungsvorrichtung zum Einfalten dieser beiden Abschnitte 9 und 10 verbunden. Hierbei wird das Seil der Abspannvorrichtung 49 zunächst um die Umlenkrolle 52 geführt, bevor die Abspannvorrichtung 49 um die mit der aufrechten Achse 13 des die beiden Abschnitte 9 und 10 verbindenden Gelenkes 16 befestigten, als Kettenrad 19 ausgebildeten Scheibe herumgeführt wird. Von hier erfolgt eine weitere Umlenkung der Abspannvorrichtung um die Umlenkrolle 53 bevor die Abspannvorrichtung 49 zu der an der Kolbenstange des Hydraulikzylinders 51 befestigen Umlenkrolle 54 gelangt. Hier erfolgt die letzte Umlenkung der Abspannvorrichtung 49, deren Ende 55 nun fest mit dem innersten Abschnitt 9 bzw. mit dem Hydraulikzylinder 51 verbunden wird.

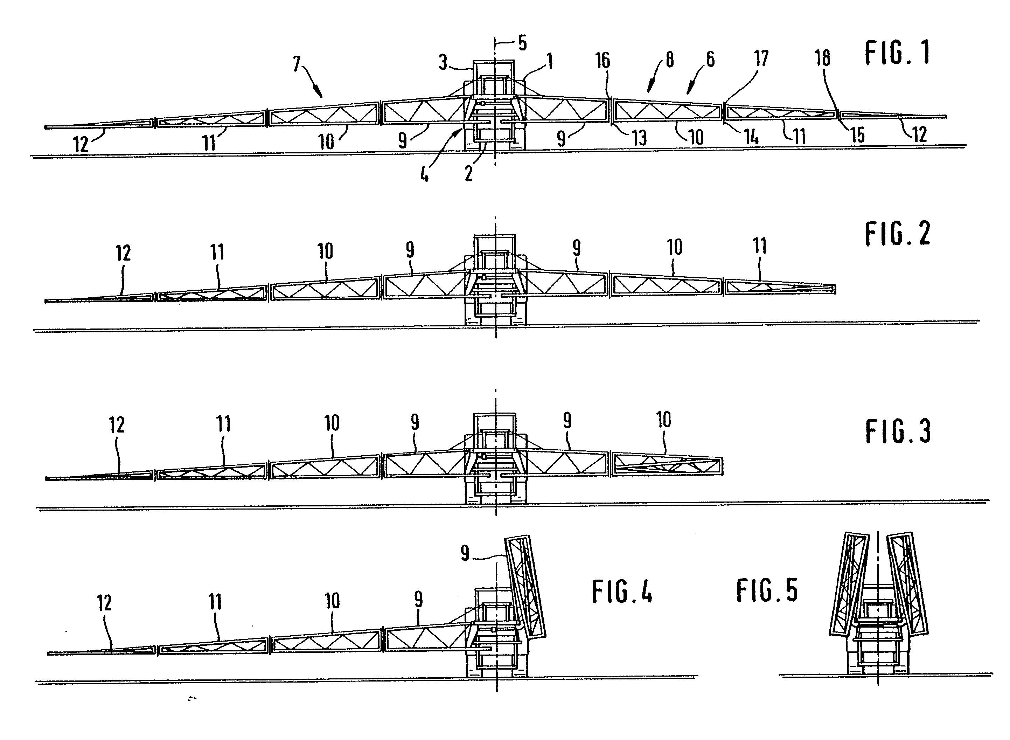

Die einzelnen Verteilerarmabschnitte 9, 10, 11 und 12 sind über zwischen diesen Abschnitten angeordnete, als elektrische Stellmotore 25 und 26 oder als hydraulische Stellmotore 33 und 51 ausgebildete Betätigungsvorrichtung gelenkig miteinander verbunden. Hierbei ist die Betätigungsvorrichtung zum Zusammenfalten des Verteilergestänges 8 zwischen dem innersten Abschnitt 9 und dem Rahmenmittelteil 4 sowie zwischen dem innersten Abschnitt 9 und dem diesem benachbarten Abschnitt 10 als Hydraulikzylinder 33 bzw. 51 ausgebildet, während die Betätigungsvorrichtung zwischen den übrigen Abschnitten 10 und 11 bzw. 11 und 12 jeweils die Elektromotore 25 bzw. 26 aufweist. Diese Betätigungsvorrichtungen 25, 26, 33 und 51 sind derart über eine Steuervorrichtung zu betätigen, daß beim Einklappen die Abschnitte 12, 11, 10 und 9 des Verteilergestänges 8 von außen nach innen nacheinander eingeklappt werden, während beim Ausklappen die Abschnitte 9, 10, 11 und 12 des Verteilergestänges 8 von innen nach außen nacheinander ausgeklappt werden. Hierdurch ist es möglich, daß sich die Verteilerarme 6 und 7 des Verteilergestänges 8 auch abschnittsweise Einklappen lassen. In Fig. 2 ist beispielsweise nur der äußere Abschnitt 12 des Verteilerarmes 6 eingeklappt. Eine Betätigung des Elektromotors 26 führt dazu, daß der Verteilerarmabschnitt 12 eine Schwenkbewegung um die aufrechte Achse 15 in Pfeilrichtung 56 ausführt. Die Fig. 3 zeigt das Verteilergestänge 8, bei dem die beiden äußeren Verteilerarmabschnitte 12 und 11 des Verteilerarmes 6 eingeklappt sind. Hierbei wird der Auslegerabschnitt 11 um die aufrechte Achse 14 in Pfeilrichtung 57 an den Auslegerabschnitt 10 herangeschwenkt, nachdem der Verteilerarmabschnitt 12 an den Verteilerarmabschnitt 11 entsprechend Fig. 2 herangeklappt ist.

Soll nun der entsprechend Fig. 3 eingeklappte Verteilerarm 6 weiter eingeklappt werden, wird der Hydraulikzylinder 51 mit Drucköl beaufschlagt. Die Beaufschlagung des Hydraulikzylinders 51 mit Drucköl bewirkt, daß die Kolbenstange dieses Hydraulikzylinders 51 ausfährt, was zu einer Spannung der Abspannvorrichtung 49 führt. Hierbei werden die entsprechend Fig. 3 eingeklappten Verteilerarmabschnitte 10, 11 und 12 um die aufrechte Achse 13 an den innersten Auslegerabschnitt 9 herangeschwenkt, da die translatorische Bewegung des Hydraulikzylinders 51 mittels des Kettenrades 19 in eine Drehbewegung umgewandelt wird, die dazu führt, daß die an den Verteilerarmabschnitten 10 herangeklappten Verteilerarmabschnitte 11 und 12 in Pfeilrichtung 58 verschwenkt werden. Gleichzeitig wird die Zugfeder 50 beim Heranfalten der Abschnitte 10, 11 und 12 den Abschnitt 9 derart vorgespannt, daß sich eine Gewichtsentlastung beim Einfalten der beiden innersten Verteilerarmabschnitte ergibt. Dieses führt dazu, daß sich die zu einem kompakten Paket zusammengefalteten Verteilerarme 6 und 7 unter geringem Kraftaufwand bei Beaufschlagung des Hydraulikzylinders 33 mit Drucköl um die annähernd in Fahrtrichtung verlaufende Schwenkachse 29 in die Transportstellung gemäß Fig. 4 überführen läßt.

Dieses Einfalten der Verteilergestänge 6 und 7 kann sowohl unabhängig voneinander als auch gemeinsam erfolgen. Beim gleichzeitigen Einfalten der Verteilerarme 6 und 7 erfolgt das Einklappen der einzelnen Verteilerarmabschnitte 9, 10, 11 und 12 in annähernd syncroner Weise. Werden beide zu einem kompakten Paket zusammengefalteten Verteilerarme 6 und 7 in die Transportstellung verschwenkt, nehmen die Verteilerarme 6 und 7 die Position gemäß Fig. 5 ein.

Zum Einklappen der Verteilerarme sei noch gesagt, daß beim Einklappen einzelner Verteilerarmabschnitte während des Spritzvorganges eine automatische Abschaltung der Zufuhr der Spritzmittel zu den Düsenleitungen der jeweils eingeklappten Verteilerarmabschnitte automatisch unterbrochen wird.

Damit die Verteilerarme 6 und 7 unabhängig voneinander, d.h. unsymetrisch zueinander ein- bzw. ausgefaltet werden können, ist die die Verteilerarme 6 und 7 verbindende Stange 35 als Ausgleichsvorrichtung 59 ausgebildet, die unsymetrische Gewichtsverhältnisse ausgleicht und gleichzeitig das Pendeln des Verteilergestänges 8 zuläßt. Da es durch das unsymetrische Ein- bzw. Ausklappen der Verteilerarme 6 und 7 zueinander zu unsymetrischen Gewichtsverhältnissen zwischen der rechten und linken Seite des Verteilergestänges 8 kommt, neigt das Gestänge 8 dazu, daß sich der jeweils ganz oder mehr ausgeklappte Verteilerarm 7 derart schräg gestellt würde, daß das äußere Ende des Verteilerarmes 7 evtl. auf die Bodenoberfläche aufschlagen könnte. Bei diesen unsymetrischen Gewichtsverhältnissen wird die Ausgleichsvorrichtung 59 automatisch wirksam und nimmt einen derartigen Gewichtsausgleich vor, daß sich das Verteilergestänge 8 unabhängig von seinem ausgefalteten Zustand immer dem Schlepperniveau anpasst und die pendelnde Gestängeanlenkung des Verteilergestänges 8 gegenüber dem Rahmenmittelteil 4 uneingeschränkt wirksam bleibt, so, als wären die Verteilerarme 6 und 7 symetrisch zueinander ausgeklappt.

**Ansprüche**

1. Landwirtschaftliche Verteilmaschine, wie beispielsweise Feldspritze, mit einem Verteilergestänge, welches sich beidseitig der Maschine quer zur Fahrtrichtung der Maschine erstreckt und am Rahmen der Verteilmaschine mittels eines oder mehrerer Gelenke in aufrechter Ebene pendelnd aufgehängt ist, wobei das Verteilergestänge einseitig teilweise oder ganz, d. h., daß die eine Seite des Verteilergestänges unabhängig von der anderen Seite einklappbar ist, dadurch gekennzeichnet, daß zwischen dem Rahmen (2) der Verteilmaschine oder dem am Rahmen (2) auf und ab bewegbar angeordneten Gestängemittelteil (4) einerseits und dem Verteilergestänge (8) andererseits eine Ausgleichsvorrichtung (59), die unsymetrischen Gewichtsverhältnisse ausgleicht und gleichzeitig das Pendeln des Gestänges (8) zuläßt, angeordnet ist, welche bei unsymetrisch ausgefalteten Verteilergestänge (8) wirksam wird.

2. Verteilmaschine nach Anspruch 1, dadurch gekennzeichnet, daß die Ausgleichsvorrichtung (59) automatisch bei unsymetrisch einfaltetem Verteilergestänge (8) wirksam wird.

FIG. 1

FIG. 2

FIG. 3

FIG. 4

FIG. 5

EP 0 428 960 A1

FIG.6

FIG.7

EP 0 428 960 A1

FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-U-8803536 (BLT-BRENDECKE LANDTECHNIK U. -HANDEL) <br> * das ganze Dokument * <br> --- | 1, 2 | A01M7/00 |
| A | FR-A-2450041 (ETS. EVRARD) <br> * Seite 1, Zeile 1 - Seite 2, Zeile 4; Ansprüche 1, 2; Figur * <br> --- | 1, 2 | |
| A, D | DE-U-8711751 (MASCHINENFABRIK RAU GMBH) <br> * Seite 5, Absatz 2 - Seite 6, Absatz 3; Figuren 1, 2, 4 * <br> --- | 1 | |
| A | MOTORISATION ET TECHNIQUE AGRICOLE no. 50, Februar 1983, Bois-le-Roi, FR Seiten 194 - 227; "Les rampes : des antagonismes à maîtriser" * Seiten 224 - 225 * <br> ----- | 1 | |

RECHERCHIERTE SACHGEBIETE (Int. Cl.5 )

A01B
A01C
A01M

**Der vorliegende Recherchenbericht wurde für alle Patentansprüche erstellt**

| Recherchenort | Abschlußdatum der Recherche | Prüfer |
|---|---|---|
| BERLIN | 04 MAERZ 1991 | MERCKX A. |